Europäisches Patentamt

European Patent Office

Office européen des brevets

(11) Veröffentlichungsnummer: **0 096 089**

**A1**

(12) # EUROPÄISCHE PATENTANMELDUNG

(21) Anmeldenummer: 82104917.8

(22) Anmeldetag: 04.06.82

(51) Int. Cl.³: **G 02 B 27/17**
**G 02 B 7/00**

(43) Veröffentlichungstag der Anmeldung:
21.12.83  Patentblatt  83/51

(84) Benannte Vertragsstaaten:
AT BE CH DE FR GB IT LI LU NL SE

(71) Anmelder: DR.-ING. RUDOLF HELL GmbH
Grenzstrasse 1-5
D-2300 Kiel 14(DE)

(72) Erfinder: Jürgensen, Heinrich
Dütschfeldredder 22
D-2301 Raisdorf(DE)

(72) Erfinder: Zelenka, Thomas
Turnstrasse 4
D-2300 Kiel(DE)

(54) Optische Ablenkeinrichtung.

(57) Optische Ablenkeinrichtung zum Ablenken eines Lichtstrahls mit einem rotierenden Spiegelrad (1), das in einem vakuumdichten Gehäuse (2) angeordnet ist und mit lichtdurchlässigen Fenstern versehen ist (3,4).

EP 0 096 089 A1

Croydon Printing Company Ltd.

Dr.-Ing. Rudolf Hell GmbH — 1 —    2.0096089
Grenzstraße 1 - 5                  Lf/Jn
2300 Kiel 14

Patentanmeldung Nr. 82/586
Kennwort: "Polygonspiegel mit Vakuumfenster"

Optische Ablenkeinrichtung

**Technisches Gebiet**
Die Erfindung bezieht sich auf das Gebiet der Reproduktionstechnik, insbesondere auf die Gebiete Bildübertragung,
Bildabtastung und Bildaufzeichnung sowie Herstellung von
Druckformen.

**Stand der Technik**
Es ist bekannt, für die Ablenkung eines Lichtstrahls rotierende Spiegelräder, auch Polygonspiegel genannt, zu verwenden, siehe z. B. US-PS 4,306,242. Bei der Bildabtastung und
-aufzeichnung kommt es auf hohe Laufruhe, d. h. Gleichförmigkeit der Ablenkbewegung, an. Aus diesem Grunde werden
hohe Anforderungen an die Präzision des Antriebs und die
Präzision des Spiegels selbst gestellt. Es hat sich aber
gezeigt, daß immer noch Restfehler vorhanden sind, die bei
der Bildabtastung bzw. Bildaufzeichnung störend in Erscheinung treten.

**Offenbarung der Erfindung**
Der vorliegenden Erfindung liegt daher die Aufgabe zugrunde,
eine verbesserte optische Ablenkeinrichtung anzugeben, mit
der die Nachteile bekannter Einrichtungen vermieden werden.
Die Erfindung erreicht dies dadurch, daß das rotierende
Spiegelrad in einem evakuierten Gehäuse angeordnet ist. Das
Gehäuse kann vorzugsweise lichtdurchlässig sein oder vakuumdichte Fenster für den Strahlein- und -austritt aufweisen.
Eine Weiterbildung der Erfindung kann darin bestehen, daß
mindestens eines der Fenster als Linse oder als Teil eines
Linsensystems ausgeführt ist.
Gemäß einer weiteren Ausgestaltung der Erfindung kann ein
Linsensystem, das als Fenster dient, ebenfalls evakuiert
werden.

0096089

### Bester Weg zur Ausführung der Erfindung

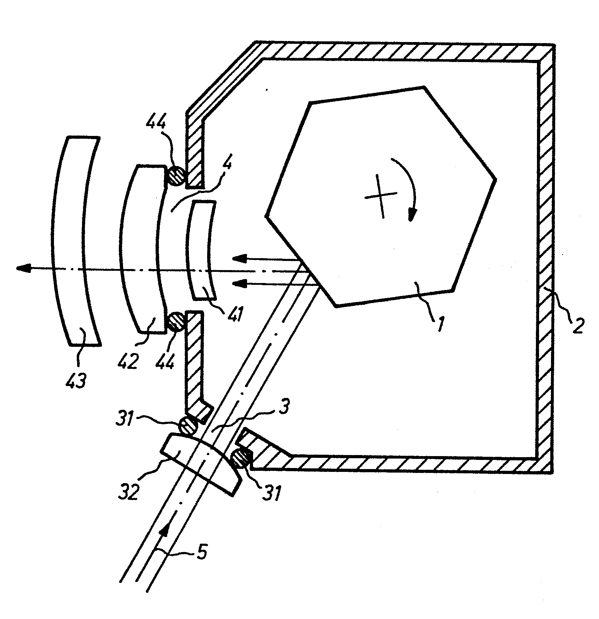

Die Erfindung wird im folgenden anhand der Figur näher erläutert. Die Figur zeigt im Schnitt ein Spiegelrad 1, das innerhalb eines evakuierten Gehäuses 2 angeordnet ist. Das Gehäuse besitzt im vorliegenden Fall zwei Fenster 3 und 4, von denen im Beispiel das Fenster 3 für den Strahleintritt und das Fenster 4 für den Strahlaustritt dient. Das Fenster 3 besteht aus einem Dichtering 31 und einer Linse 32, die als Beamexpander ausgebildet ist. Der einfallende Lichtstrahl 5 wird von dem Spiegelrad 1 durch das zweite Fenster 4, das im vorliegenden Fall als Teil der Scannerlinse ausgebildet ist, die ihrerseits aus den Linsen 41, 42 und 43 besteht, auf die nicht dargestellte Abtast- bzw. Aufzeichnungsfläche gerichtet. Das Fenster wird durch die Linse 42 und einen Dichtering 44 gebildet. Es könnte aber auch so beschaffen sein, daß die Linse 41 oder die Linse 43 als Vakuumabdichtung dient. Dieses Fenster kann weiterhin so ausgebildet sein, daß die Linsen innerhalb einer vakuumdichten Halterung angeordnet sind und daß das gesamte Linsensystem evakuiert ist. Es ist weiterhin möglich, die Linsen direkt in das Gehäuse einzukleben oder anstelle der komplizierten Scannerlinse einfache Linsen zu verwenden oder auch die Fenster durch plane Platten abzuschließen.

Es hat sich gezeigt, daß durch die Evakuierung des Gehäuses eine wesentlich höhere Laufruhe und Gleichförmigkeit in der Ablenkbewegung erreicht wird, da Luftwirbel und Reibung vermieden werden.
Außerdem kann eine kleinere Bauweise erzielt werden und eine wesentlich bessere Justierung, da nunmehr Spiegelrad und Scanneroptik als eine Einheit verdreht, gekippt oder verschoben werden können. Ohne diese einstückige Ausbildung müßten Spiegelrad und Scanneroptik getrennt justiert werden.

Patentansprüche

1. Optische Ablenkeinrichtung zum Ablenken eines Lichtstrahls mittels eines Drehspiegels, dadurch gekennzeichnet, daß der rotierende Drehspiegel von einem evakuierten Gefäß umgeben ist.

2. Einrichtung nach Anspruch 1, dadurch gekennzeichnet, daß das Gehäuse lichtdurchlässig ist.

3. Einrichtung nach Anspruch 1, dadurch gekennzeichnet, daß das Gehäuse vakuumdichte Fenster für den Ein- und Austritt des Lichtstrahls aufweist.

4. Einrichtung nach Anspruch 3, dadurch gekennzeichnet, daß die Fenster aus lichtdurchlässigen planparallelen Platten bestehen.

5. Einrichtung nach Anspruch 3, dadurch gekennzeichnet, daß mindestens eines der Fenster als Linse ausgebildet ist.

6. Einrichtung nach Anspruch 5, dadurch gekennzeichnet, daß das Fenster ein Teil eines Linsensystems ist.

7. Einrichtung nach Anspruch 3, dadurch gekennzeichnet, daß beide Fenster als Linsensysteme ausgebildet sind, wobei eines der Fenster als Scannerlinse und das andere Fenster als Beamexpander ausgebildet sind.

8. Einrichtung nach Anspruch 6 oder 7, dadurch gekennzeichnet, daß das Linsensystem evakuiert ist.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 02 B 27/17 |
| X | EP-A-0 006 727 (FLIR SYSTEM) * Seite 6, Zeilen 22-30; Anspruch 13; Figuren 1,2 * | 1-4 | G 02 B 7/00 |
| | --- | | |
| A | US-A-4 141 620 (T. GOSHIMA) * Ansprüche; Figuren 1,3 * | 2-4 | |
| | --- | | |
| A | US-A-4 010 365 (F.J. MEYERS) * Ansprüche; Figur 3 * | 5,6 | |
| | ----- | | |

RECHERCHIERTE SACHGEBIETE (Int. Cl. ³)

G 02 B 27/17
G 02 B 23/16
G 02 B 7/00
G 06 K 15/12
H 04 N 3/08
H 04 N 1/12

Der vorliegende Recherchenbericht wurde für alle Patentansprüche erstellt.

| Recherchenort DEN HAAG | Abschlußdatum der Recherche 10-02-1983 | Prüfer PFAHLER R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82